# NEUE EUROPÄISCHE PATENTSCHRIFT

(11) **EP 1 963 804 B2**
(45) Veröffentlichungstag und Bekanntmachung des Hinweises auf die Entscheidung über den Einspruch: **26.10.2016**
(45) Hinweis auf die Patenterteilung: 01.05.2013
(21) Anmeldenummer: 06829410.7
(22) Anmeldetag: 08.12.2006
(51) Int. Cl.: G01K 17/06, G01K 17/10

(54) **VERBRAUCHSZÄHLER**
CONSUMPTION METER
COMPTEUR DE CONSOMMATION

(30) Priorität: 20.12.2005 DE 102005061216
(43) Veröffentlichungstag der Anmeldung: 03.09.2008
(73) Patentinhaber: Sensus Spectrum LLC, Raleigh, NC 27615 (US)
(72) Erfinder: SOBEL, Klaus, 67134 Birkenheide (DE)
(74) Vertreter: Patentanwälte Dr. Keller, Schwertfeger
(86) Internationale Anmeldenummer: PCT/EP2006/011798
(87) Internationale Veröffentlichungsnummer: WO 2007/071330

(56) Entgegenhaltungen:
- EP-B1- 0 742 443
- DE-A1- 3 525 224
- DE-A1- 19 527 702
- DE-A1- 19 922 603
- GB-A- 2 280 290
- US-A- 5 111 407
- US-A1- 4 577 977
- US-A1- 6 161 100
- din EN 1434-3:1997:s. 1-4

## Beschreibung

### Technisches Gebiet:

Die Erfindung betrifft Verbrauchszähler nach dem Oberbegriff des Anspruchs 1.

### Stand der Technik:

Verbrauchserfassungsgeräte für Wärme, Wasser oder Gas bestehen wie zum Beispiel aus Dokument US6161100 bekannt, überwiegend aus einem Grundgerät, welches den eigentlichen Verbrauch misst, und einer Mess-, Rechen- und/oder Anzeigeelektronik. Falls eine Fernablesung der Verbrauchswerte gewünscht wird, sind entsprechende Datenübertragungsmodule vorgesehen, die entweder von Haus aus integriert sind oder bei Bedarf vor Ort nachgerüstet werden können.

Die Nachrüstung muss durch Fachpersonal erfolgen, da sichergestellt sein muss, dass Grundgerät und Nachrüstmodul elektrisch, programmtechnisch und organisatorisch, d. h. mit richtiger Zuordnung von Messgerätenummer und Verbrauchsstelle übereinstimmen. Andernfalls besteht die Gefahr, dass die vom Grundgerät übermittelten Daten falsch interpretiert und somit falsche Verbrauchswerte errechnet und abgerechnet werden. Das ist unbefriedigend.

Verbrauchszähler der hier relevanten Art werden meistens von einer Batterie gespeist, wobei die Batterie elektrische Energie für wenigstens die gesamte Eichdauer garantieren muss. Je nach Typ des Verbrauchszählers beträgt die Eichdauer 5 bis 7 Jahre. Dies bedeutet, dass die Elektronik äußerst energiesparend arbeiten muss. Das bedeutet ferner, dass viele in der Technik bekannte Standardschaltungen und -prozeduren wegen ihres hohen Energieverbrauchs nicht einsetzbar sind.

### Darstellung der Erfindung:

Der vorliegenden Erfindung liegt die Aufgabe zugrunde, einen Verbrauchszähler der eingangs genannten Art anzugeben, der einerseits eichfähig ist, andererseits aber dem Anwender alle von diesem gewünschten Daten, welche dies auch immer sein mögen, zur Verfügung stellen kann und die Daten und ihre Zuordnung zur Verbrauchsstelle auch ohne weitere organisatorische Maßnahmen erhalten bleiben, wenn etwas ausgetauscht wird.

Diese Aufgabe wird gelöst durch einen Verbrauchszähler gemäß Anspruch 1.

Die vorliegende Erfingung beruht auf dem prinzip, den Verbrauchszähler in zwei in sich geschlossene Einheiten aufzuteilen. Die eine Einheit ist das Grundgerät, welches nur die für die Eichfähigkeit erforderlichen Komponenten enthält. Durch diese Minimalisierung ist es möglich, den Energieverbrauch und damit auch die zur Aufrechterhaltung der Messfunktion während der gesamten Eichdauer benötigte Batterie zu minimieren. Alle über diese Minimalfunktion hinausgehenden Funktionen werden in ein Modul verlegt, das auch die sonstigen Funktionen und Prozeduren zur Verfügung stellt, die der jeweilige Benutzer benötigt.

Von besonderem Vorteil ist jedoch die in das Modul integrierte Fähigkeit, der individuellen Gerätenummer des Grundgeräts einen vom Benutzer frei wählbaren Aliasnamen zuzuordnen und unter diesem Aliasnamen alle relevanten Daten von Grundgerät und Modul auslesen zu können. Das bedeutet, dass auch nach Austausch des Grundgerätes, beispielsweise wegen Ablaufs der Eichdauer, in der Verbrauchsabrechnung keinerlei Änderungen vorgenommen werden müssen, wie es derzeit allgemein nötig ist.

Hierzu verwenden Grundgerät und Modul ein Datenaustauschprotokoll, welches den Abgleich von Namen und Daten vollautomatisch durchzuführen im Stande ist. Dadurch genügt es, das Grundgerät auszutauschen; weitere Einstellungen, Programmierungen oder dergleichen sind nicht erforderlich. Der gleiche Vorteil ergibt sich, wenn wegen gestiegener Anforderungen ein vorhandenes Modul gegen ein erweitertes Modul ausgewechselt wird.

Gemäß der Ausgestaltung der Erfindung ist die Datenübertragung zwischen Modul und Grundgerät bidirektional. Dank der bidirektionalen Datelübertragung ist es u. a. möglich, im Modul berechnete oder erzeugte Werte und Daten auf dem Display des Grundgerätes anzeigen zu lassen.

Die Übertragung der Daten zwischen Modul und Grundgerät kann auf unterschiedliche Arten erfolgen.

Vorteilhaft ist eine Datenübertragung über induktiv gekoppelte Spulen. Diese Spulen können entweder handelsüblich aus Draht gewickelt oder in SMD-Technik produziert sein. Sind die Geräte mit gedruckten Leiterplatten ausgerüstet, so lassen sich die Spulen auch direkt auf der Leiterplatte realisieren.

Eine alternative Datenübertragung ist auch über kapazitiv gekoppelte Elektroden möglich. Diese Elektroden können gegebenenfalls auf einer gedruckten Leiterplatte realisiert werden.

Schließlich besteht die Möglichkeit, die Datenübertragung auch über Kontakte zu realisieren.

Falls erforderlich lässt sich auch eine Energieübertragung zwischen Modul und Grundgerät realisieren, vorzugsweise über induktiv gekoppelte Spulen. Dabei können die selben Spulen verwendet werden, über die der Datenaustausch erfolgt.

Gemäß einer bevorzugten Ausgestaltung der Erfindung ist die Recheneinheit des Moduls im Stande, wenigstens einen der folgenden Werte zu errechnen: Energieverbrauch pro Monat, Energieverbrauch pro Tag, Energieverbrauch pro Stunde, maximaler Energieverbrauch pro Stunde, maximale Fluidtemperatur, maximale Temperaturdifferenz, maximaler Durchfluss.

Gemäß einer Weiterbildung hierzu ist die Speichereinheit des Moduls in der Lage, wenigstens einen dieser Werte zu speichern und dazu gegebenenfalls parallel zum Grundgerät den gesamten Energieverbrauch.

Gemäß einer Ausgestaltung ist das Grundgerät in der Lage, nicht nur den gesamten Energieverbrauch sondern gegebenenfalls parallel zum Modul wenigstens einen der vorstehend genannten Werte zu speichern gemäß einer Weiterbildung auf dem eigenen Display anzuzeigen. Auf diese Weise wird eine erhöhte Datensicherheit erreicht, ohne dass der Benutzer eingreifen müsste.

Zur Reduzierung des Energieverbrauchs besitzt das Grundgerät vorteilhafterweise eine Einheit zur Auswertung eines vom Modul ausgesandten Interruptsignals. Das bedeutet, dass die Elektronik des Grundgeräts nur dann für eine Datenübertragung in Betrieb geht, wenn dieses Interruptsignal erkannt wird. Dadurch kann das Grundgerät auf ständig durchlaufende Zeitgeber und Empfangseinrichtungen verzichten, so dass die Kapazität der Batterie weiter reduziert werden kann.

Falls das Grundgerät Messpulse bestimmter Wertigkeit abgibt, besitzt das Modul gemäß einer Weiterbildung der Erfindung eine Einrichtung zur Auswertung dieser Pulssignale.

In diesem Fall besitzt das Modul vorzugsweise eine Einheit zur Übersetzung der Pulswertigkeit der vom Grundgerät ausgesandten Pulssignale. Im Falle eines Wasserzählers bedeutet dies, dass die Pulse die Wertigkeit ein Liter, zehn Liter, hundert Liter usw. haben können. Umgekehrt ist es auch möglich, dass das Modul das Grundgerät anweist, die Pulswertigkeit so einzustellen, wie sie vom Modul benötigt wird.

Vorteilhafterweise besitzt das Modul einen Anschluss für einen externen Bus. Dieser Anschluss kann drahtlos oder auch drahtgebunden sein.

Vorteilhafterweise wird als Bus ein M-Bus (IEC 870-5) verwendet. Dieser ist in der Lage, sowohl Energie als auch Daten über dieselbe Leitung zu übertragen.

Gemäß der Erfindung ist die Schnittstelle des Moduls zum Grundgerät identisch mit der Schnittstelle für den externen Anschluss. Dadurch ist es möglich, das Modul "durchsichtig" zu schalten, um von einer externen Einheit durch das Modul hindurch direkt auf das Grundgerät zuzugreifen, beispielsweise im Fall einer Wartung, einer Neuprogrammierung oder dergleichen.

### Kurze Beschreibung der Zeichnungen:

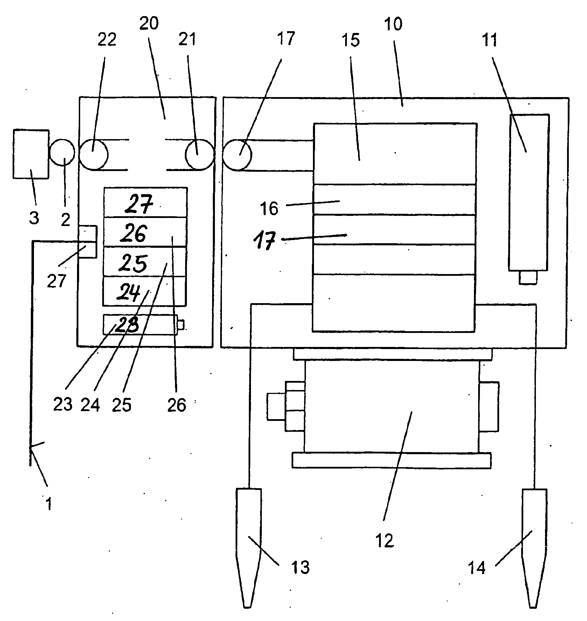

Anhand der Zeichnung soll die Erfindung in Form eines Ausführungsbeispiels erläutert werden.

### Wege zur Ausführung der Erfindung und gewerbliche Verwertbarkeit:

Die Zeichnung zeigt rein schematisch einen Wärmeverbrauchszähler, bestehend aus einem Grundgerät 10 und einem Modul 20.

Das Grundgerät 10 umfasst einen Volumenmesser 12, der im Fall einer Warmwasserheizung die Heizungswassermenge misst, einen Vorlauftemperaturfühler 13 und einen Rücklauftemperaturfühler 14. Eine Recheneinheit 15 errechnet aus diesen Messwerten den Wärmeenergieverbrauch, wobei in einem Speicher 16 hinterlegte Korrekturwerte für eine exakte Energieanzeige sorgen.

Gespeist wird die Rechen- und Speichereinheit 15, 16 durch eine Batterie 11, deren Kapazität so groß sein muss, dass sie das Grundgerät 10 während der gesamten Eichdauer von fünf Jahren versorgen kann, ohne dass es zu einem Ausfall kommt.

Das Grundgerät 10 enthält alle Komponenten, die für die Eichfähigkeit erforderlich sind.

Das Grundgerät 10 enthält eine Schnittstelle 17 für Daten und gegebenenfalls Energie, hier in Form einer Induktionsspule dargestellt. Es versteht sich, dass die Daten- und Energieübertragung auch kapazitiv erfolgen kann. Auch ist eine drahtgebundene Übertragung möglich.

Das Modul 20 enthält eine Schnittstelle 21 zur Übertragung von Daten und gegebenenfalls Energie an das Grundgerät 10, hier ebenfalls in Form einer Induktionsspule dargestellt. Des weiteren enthält das Modul 20 eine externe Schnittstelle 22 zur Übertragung von Daten für z. B. Service- oder Verbrauchsdatenerfassungszwecke über die Schnittstelle 2 eines mobilen Gerätes 3 sowie ggf. eine weitere Schnittstelle 27 zu einem externen Datenbus 1, über den ggf. auch Energie an das Modul 20 übertragen wird.

Darüber hinaus enthält das Modul 20 eine eigene Spannungsquelle 23, sofern keine Speisung von außen erfolgt, eine Recheneinheit 24 und eine Speichereinheit 25.

Gegebenenfalls kann auch ein Interrupt-Generator 26 vorgesehen sein. Der Interrupt wird von einer Auswerteeinheit 17 im Grundgerät 10 ausgewertet.

Grundgerät 10 und Modul 20 sind jeweils für sich gegen Umwelteinflüsse durch eine geschlossene Ausführung geschützt.

Dank der erfindungsgemäßen Zweiteilung lässt sich eine Produktion mit minimalen Kosten und ein Betrieb mit minimalem Organisationsaufwand erreichen. Es wird nur ein einziges geeichtes Grundgerät benötigt, das mit den minimalen Komponenten ausgerüstet ist, die auf minimalen Energieverbrauch hin ausgesucht sind, so dass auch nur eine Batterie mit minimaler Kapazität eingebaut werden muss. Durch Auswahl des dazu passenden Moduls lässt sich jede gewünschte Zusatzfunktion realisieren. Falls der Benutzer des Verbrauchszählers weitere Funktionen benötigt, lässt sich dies durch einfachen Austausch des Moduls ohne Eingriff in das geeichte Grundgerät erreichen.

Durch den selbsttätigen Abgleich der Daten zwischen Grundgerät und Modul wird der Organisationsaufwand, den der Benutzer betreiben muss, erheblich reduziert, was sich insbesondere bei Messanlagen mit einer Vielzahl von Messstellen, beispielsweise bei einer Wasserversorgungs- oder Heizungsanlage in einem Hochhaus, in einer deutlichen Kostenreduktion bemerkbar macht.

Des weiteren wird durch den Austausch der Daten zwischen Grundgerät und Modul und Speicherung der Daten in Grundgerät und Modul eine erhöhte Datensicherheit erreicht werden.

Eine weitere Reduzierung der Batteriekapazität im Grundgerät lässt sich erreichen, wenn vom Modul Energie an das Grundgerät übertragen wird. Der umgekehrte Fall, d. h. die Energieübertragung vom Grundgerät zum Modul ist grundsätzlich ebenfalls möglich.

## Patentansprüche

1. Verbrauchszähler, umfassend
- eine Gerätenummer,
- einen Volumenmesser (12) für ein Messfluid,
- gegebenenfalls wenigstens einen Temperatursensor (13, 14),
- eine Recheneinheit (15), die aus den Messwerten und gegebenenfalls in hinterlegten Korrekturwerten die verbrauchte Energie errechnet, speichert und/oder anzeigt,
- eine Speichereinheit (16),
- eine Datenschnittstelle (17)
- und eine Batterie (11) für die Versorgung der Mess- und Recheneinheiten (15, 16) während der Eichdauer des Verbrauchszählers,
**gekennzeichnet durch** die Merkmale:
- der Verbrauchszähler ist aufgeteilt in ein geeichtes Grundgerät (10) und ein separates Modul (20)
- das Modul (20) umfasst
- eine Datenschnittstelle (21) zum Grundgerät (10) zur Übertragung von Daten zu und von dem Grundgerät (10),
- eine Recheneinheit (25),
- eine Speichereinheit (24),
- eine externe Datenschnittstelle (22) oder eine externe Datenschnittstelle (22) und eine Schnittstelle (27) zu einem externen Bus (1),
- eine Stromversorgungseinheit (23) und/oder einen externen Energieversorgungsanschluss,
- das Grundgerät (10) enthält
- alle Komponenten, die für die Eichfähigkeit erforderlich sind, nämlich Volumenmesser (12), gegebenenfalls Temperatursensoren (13, 14), Recheneinheit (15), Speichereinheit (16) und Batterie (11),
- und eine Datenschnittstelle (17) zum Modul (20) zur Übertragung von Daten zu und von dem Modul (20),
- die Speichereinheit (24) des Moduls (20) speichert parallel zum Grundgerät (10) Speicherwerte des Grundgeräts (10),
- die Speichereinheit (16) des Grundgeräts (10) speichert parallel zum Modul (20) Speicherwerte des Moduls (20),
- Grundgerät (10) und Modul (20) verwenden ein Datenaustauschprotokoll, welches den Abgleich von Daten vollautomatisch durchzuführen im Stande ist,
- das Modul (20) besitzt eine Einrichtung zur Zuordnung einer individuellen Gerätenummer des Grundgeräts (10) zu einem programmierbaren Aliasnamen,
- die Schnittstelle (21) des Moduls (20) zum Grundgerät (10) ist elektrisch und funktional identisch mit der Schnittstelle (22) für den externen Anschluss,
- die Schnittstelle (17) des Grundgeräts (10) ist elektrisch, mechanisch und funktional identisch mit der Schnittstelle (22) des Moduls (20) für den externen Anschluss.

2. Verbrauchszähler nach Anspruch 1, **gekennzeichnet durch** das Merkmal:
- die Recheneinheit (25) des Moduls (20) errechnet wenigstens einen der Werte
- Energieverbrauch pro Stunde,
- Energieverbrauch pro Tag,
- Energieverbrauch pro Monat,
- maximaler Energieverbrauch pro Stunde,
- maximaler Durchfluss,
- maximale Fluidtemperatur,
- maximale Temperaturdifferenz.

3. Verbrauchszähler nach Anspruch 1 oder 2, **gekennzeichnet durch** das Merkmal:
- das Grundgerät (10) besitzt eine Einheit zur Auswertung eines vom Modul (20) ausgesandten Interrupt-Signals und das Modul (20) besitzt eine Einrichtung zur Auswertung eines vom Grundgerät ausgesandten Interrupt-Signals.

4. Verbrauchszähler nach einem der Ansprüche 1 bis 3, **gekennzeichnet durch** das Merkmal:
- zur Datenübertragung zwischen Grundgerät (10) und Modul (20) sind induktiv gekoppelte Spulen (17, 21), kapazitiv gekoppelte Elektroden oder Kontakte vorgesehen.

5. Verbrauchszähler nach einem der Ansprüche 1 bis 4, **gekennzeichnet durch** das Merkmal:
- zur Energieübertragung zwischen Grundgerät (10) und Modul (20) sind induktiv gekoppelte Spulen vorgesehen.

6. Verbrauchszähler nach einem der Ansprüche 1 bis 5, **gekennzeichnet durch** die Merkmale:
- das Modul (20) besitzt
- eine Einheit (28) zur Auswertung von Pulssignalen des Grundgeräts (10)
- und/oder eine Einheit zur Übersetzung der Pulswertigkeit der vom Grundgerät (10) ausgesandten Pulssignale.

7. Verbrauchszähler nach einem der Ansprüche 1 bis 6, **gekennzeichnet durch** das Merkmal:
- das Grundgerät (10) ist gegen Umwelteinflüsse geschützt gekapselt.

8. Verbrauchszähler nach einem der Ansprüche 1 bis 7, **gekennzeichnet durch** das Merkmal:
- das Modul (20) ist gegen Umwelteinflüsse geschützt gekapselt.

## Claims

1. Consumption meter comprising
- an apparatus number,
- a volume indicator (12) for a measuring fluid,
- optionally at least one temperature sensor (13, 14),
- an arithmetic unit (15) which uses the readings and optionally the stored correction values to calculate, store and/or display the energy consumed,
- a storage unit (16),
- a data interface (17)
- and a battery (11) for powering the measuring and arithmetic units (15, 16) for the duration of the calibration of the consumption meter,
**characterised by** the features that:
- the consumption meter is divided into a calibrated basic apparatus (10) and a separate module (20),
- the module (20) comprises
- a data interface (21) to the basic apparatus (10) for transmitting data to and from the basic apparatus (10),
- an arithmetic unit (25),
- a storage unit (24),
- an external data interface (22) or an external data interface (22) and an interface (27) to an external bus (1),
- a current supply unit (23) and/or an external energy supply connection,
- the basic apparatus (10) comprises
- all components required for the calibration capacity, specifically the volume meter (12), optionally the temperature sensors (13, 14), the arithmetic unit (15), the storage unit (16) and the battery (11),
- and a data interface (17) to the module (20) for transmitting data to and from the module (20),
- parallely to the basic apparatus (10), the storage unit (24) of the module (20) stores storage values of the basic apparatus (10),
- parallely to the module (20), the storage unit (16) of the basic apparatus (10) stores storage values of the module (20),
- the basic apparatus (10) and the module (20) use a data-exchange protocol capable of performing fully automated data-matching,
- the module (20) has a device (25) for associating an individual apparatus number of the basic apparatus (10) with a programmable alias name,
- the interface (21) of the module (20) to the basic apparatus (10) is electrically and functionally identical to the interface (22) for the external connection,
- the interface (17) of the basic apparatus (10) is electrically, mechanically and functionally identical to the interface (22) of the module (20) for the external connection.

2. Consumption meter according to claim 1, **characterised by** the feature that:
- the arithmetic unit (25) of the module (20) calculates at least one of the following values:
- hourly energy consumption;
- daily energy consumption;
- monthly energy consumption;
- maximum hourly energy consumption;
- maximum flow;
- maximum fluid temperature;
- maximum temperature difference.

3. Consumption meter according to either claim 1 or claim 2, **characterised by** the feature that:
- the basic apparatus (10) has a unit for evaluating an interrupt signal emitted by the module (20) and the module (20) has a device for evaluating an interrupt signal emitted by the basic apparatus.

4. Consumption meter according to any of claims 1 to 3, **characterised by** the feature that:
- inductively coupled coils (17, 21), capacitively coupled electrodes or contacts are provided between the basic apparatus (10) and the module (20) for data transmission.

5. Consumption meter according to any of claims 1 to 4, **characterised by** the feature that:
- inductively coupled coils are provided between the basic apparatus (10) and the module (20) for energy transmission.

6. Consumption meter according to any of claims 1 to 5, **characterised by** the features that:
- the module (20) has
- a unit (28) for evaluating pulse signals of the basic apparatus (10)
- and/or a unit for translating the pulse value of the pulse signals emitted by the basic apparatus (10).

7. Consumption meter according to any of claims 1 to 6, **characterised by** the feature that:
- the basic apparatus (10) is encapsulated in a manner which protects against environmental influences.

8. Consumption meter according to any of claims 1 to 7, **characterised by** the feature that:
- the module (20) is encapsulated in a manner which protects against environmental influences.

## Revendications

1. Compteur de consommation, comprenant
- un numéro d'appareil,
- un débitmètre volumétrique (12) dédié à un fluide à mesurer,
- le cas échéant, au moins une sonde thermométrique (13, 14),
- une unité de calcul (15) qui calcule, mémorise et/ou affiche l'énergie consommée en se fondant sur les valeurs mesurées et, éventuellement, sur des valeurs correctrices consignées,
- une unité de mémorisation (16),
- un interface de données (17)
- et une batterie (11) dévolue à l'alimentation des unités (15, 16) de mesure et de calcul pendant la durée d'étalonnage dudit compteur de consommation,
**caractérisé par** les caractéristiques suivantes :
- ledit compteur de consommation est scindé en un appareil de base étalonné (10) et en un module distinct (20),
- ledit module (20) inclut
- un interface de données (21) affecté à l'appareil de base (10), en vue de la transmission de données à destination et en provenance dudit appareil de base (10),
- une unité de calcul (25),
- une unité de mémorisation (24),
- un interface extérieur de données (22), ou un interface extérieur de données (22) et un interface (27) affecté à un bus extérieur (1),
- une unité d'alimentation en courant (23), et/ou un raccord extérieur d'alimentation en énergie,
- ledit appareil de base (10) inclut
- tous les composants nécessaires à la capacité d'étalonnage, c'est-à-dire un débitmètre volumétrique (12), le cas échéant des sondes thermométriques (13, 14), une unité de calcul (15), une unité de mémorisation (16) et une batterie (11),
- et un interface de données (17) affecté au module (20), en vue de la transmission de données à destination et en provenance dudit module (20),
- l'unité de mémorisation (24) dudit module (20) stocke des valeurs mémorisées de l'appareil de base (10), parallèlement audit appareil de base (10),
- l'unité de mémorisation (16) dudit appareil de base (10) stocke des valeurs mémorisées du module (20), parallèlement audit module (20),
- ledit appareil de base (10) et ledit module (20) utilisent un protocole d'échange de données, apte à exécuter la synchronisation de données en mode entièrement automatique,
- ledit module (20) comporte un dispositif conçu pour assigner un numéro individuel de l'appareil de base (10) à un pseudonyme programmable,
- l'interface (21) dudit module (20), affecté à l'appareil de base (10), est électriquement et fonctionnellement identique à l'interface (22) dédié au raccord extérieur,
- l'interface (17) dudit appareil de base (10) est électriquement, mécaniquement et fonctionnellement identique audit interface (22) dudit module (20) qui est dédié audit raccord extérieur.

2. Compteur de consommation selon la revendication 1, **caractérisé par** la caractéristique suivante :
- l'unité de calcul (25) du module (20) calcule au moins l'une des valeurs suivantes :
- consommation d'énergie par heure,
- consommation d'énergie par jour,
- consommation d'énergie par mois,
- consommation maximale d'énergie par heure,
- débit maximal,
- température maximale du fluide,
- différence maximale de température.

3. Compteur de consommation selon la revendication 1 ou 2, **caractérisé par** la caractéristique suivante :
- l'appareil de base (10) présente une unité dévolue à l'évaluation d'un signal d'interruption émis par le module (20), et ledit module (20) présente un dispositif dévolu à l'évaluation d'un signal d'interruption émis par ledit appareil de base .

4. Compteur de consommation selon l'une des revendications 1 à 3, **caractérisé par** la caractéristique suivante :
- des bobines (17, 21) à couplage inductif, des électrodes à couplage capacitif, ou des contacts, sont prévu(e)s pour la transmission de données entre l'appareil de base (10) et le module (20).

5. Compteur de consommation selon l'une des revendications 1 à 4, **caractérisé par** la caractéristique suivante :
- des bobines à couplage inductif sont prévues pour la transmission d'énergie entre l'appareil de base (10) et le module (20).

6. Compteur de consommation selon l'une des revendications 1 à 5, **caractérisé par** les caractéristiques suivantes :
- le module (20) comporte
- une unité (28) dévolue à l'évaluation de signaux d'impulsions de l'appareil de base (10)
- et/ou une unité dévolue à l'interprétation de la valence impulsionnelle des signaux d'impulsions émis par ledit appareil de base (10).

7. Compteur de consommation selon l'une des revendications 1 à 6, **caractérisé par** la caractéristique suivante :
- l'appareil de base (10) est encapsulé avec protection contre des influences de l' environnement.

8. Compteur de consommation selon l'une des revendications 1 à 7, **caractérisé par** la caractéristique suivante :
- le module (20) est encapsulé avec protection contre des influences de l'environnement.
